(19) Europäisches Patentamt
European Patent Office
Office européen des brevets

(11) **EP 4 222 044 B1**

(12) **EUROPÄISCHE PATENTSCHRIFT**

(45) Veröffentlichungstag und Bekanntmachung des Hinweises auf die Patenterteilung:
**16.07.2025 Patentblatt 2025/29**

(21) Anmeldenummer: **21782736.9**

(22) Anmeldetag: **24.09.2021**

(51) Internationale Patentklassifikation (IPC):
**B62D 6/10** *(2006.01)* **G01L 3/10** *(2006.01)*
**G01L 5/22** *(2006.01)*

(52) Gemeinsame Patentklassifikation (CPC):
**B62D 6/10; G01L 3/101; G01L 3/104; G01L 5/221**

(86) Internationale Anmeldenummer:
**PCT/EP2021/076301**

(87) Internationale Veröffentlichungsnummer:
**WO 2022/069354 (07.04.2022 Gazette 2022/14)**

(54) **ELEKTROMECHANISCHES LENKSYSTEM UND VERFAHREN ZUR KOMPENSATION EINES MESSSIGNALS EINER DREHMOMENTSENSORVORRICHTUNG**

ELECTROMECHANICAL STEERING SYSTEM AND METHOD FOR COMPENSATING A MEASUREMENT SIGNAL FROM A TORQUE SENSOR DEVICE

SYSTÈME DE DIRECTION ÉLECTROMÉCANIQUE ET PROCÉDÉ DE COMPENSATION D'UN SIGNAL DE MESURE PROVENANT D'UN DISPOSITIF CAPTEUR DE COUPLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.09.2020 DE 102020212378**

(43) Veröffentlichungstag der Anmeldung:
**09.08.2023 Patentblatt 2023/32**

(73) Patentinhaber:
• **thyssenkrupp Presta AG**
**9492 Eschen (LI)**

• **thyssenkrupp AG**
**45143 Essen (DE)**

(72) Erfinder: **TÓTH, Tivadar Kristóf**
**2071 Páty (HU)**

(74) Vertreter: **thyssenkrupp Intellectual Property GmbH**
**ThyssenKrupp Allee 1**
**45143 Essen (DE)**

(56) Entgegenhaltungen:
**DE-A1- 10 037 692 DE-A1- 102015 117 504**
**US-A1- 2020 264 062**

## Beschreibung

Die Erfindung betrifft ein elektromechanisches Lenksystem umfassend eine Lenkwelle, über die mittels einer Lenkhandhabe ein Lenkbefehl vorgegeben werden kann, ein Lenkgetriebe, welches dazu ausgebildet ist, einen Lenkbefehl unter Berücksichtigung von wenigstens einer Eingangsgröße in eine Lenkbewegung von lenkbaren Rädern eines Kraftfahrzeugs umzusetzen, und eine magnetische Drehmomentsensorvorrichtung zum Messen eines auf die Lenkwelle aufgebrachten Drehmoments, wobei die Drehmomentsensorvorrichtung einen Sensor zur Erfassung eines unkompensierten Messsignals aufweist. Des Weiteren betrifft die Erfindung ein Verfahren zur Kompensation eines Messsignals einer Drehmomentsensorvorrichtung für ein elektromechanisches Lenksystem eines Kraftfahrzeugs.

Eine magnetische Drehmomentsensorvorrichtung für ein elektromechanisches Lenksystem eines Kraftfahrzeugs kann unter Verwendung der sogenannten Moving-Magnet-Technologie ausgebildet sein. Dabei wird das durch den Kraftfahrzeugfahrer über eine Lenkhandhandhabe, insbesondere Lenkrad, in eine Eingangswelle eingebrachte Drehmoment, auch als Lenkdrehmoment bezeichnet, gemessen, indem das von einem drehfest mit der Eingangswelle verbundenen Magnetring erzeugte Magnetfeld erfasst wird. Das Drehmoment wird in Abhängigkeit von einem erfassten Drehwinkel, auch als Lenkdrehwinkel bzw. Differenzwinkel bezeichnet, ermittelt. Da es sich dabei um eine berührungslose bzw. kontaktlose Erfassung des Drehmoments handelt, das heißt die sich relativ zueinander bewegenden Bauelemente sich nicht mechanisch kontaktieren, ist die Drehmomentsensorvorrichtung verschleißfrei und somit praktisch wartungsfrei und somit wiederum kosteneffizient in Bezug auf die Betriebskosten. Daher ist sie besonders dazu geeignet, um in der Kraftfahrzeugtechnik eingesetzt zu werden.

Solche magnetischen Drehmomentsensorvorrichtungen sind aus dem Stand der Technik bekannt, beispielsweise aus EP 2 664 906 A2 und WO 2017/115922 A1.

Darüber hinaus wird in der US 2020/264062 A1 ein Drehmomentsensormodul für ein Steuerungssystem, insbesondere eine elektronische Hilfskraftlenkung, beschrieben, wobei eine Kalibrierung eines erfassten Drehmomentsignals offenbart wird. Durch die Kalibrierung soll ein durch ein externes Magnetfeld verursachter Fehler ausgeglichen werden. Dabei ist eine Kalibrierung eines Offsets des erfassten Signals und eine Kalibrierung einer Steigung des erfassten Signals offenbart.

Ferner offenbart die DE 10 2015 117 504 A1 ein Verfahren zum Betreiben eines Lenksystems eines Kraftfahrzeugs. Dabei ist vorgesehen, dass eine erste magnetfeldsensitive Sensoreinrichtung ein nicht-störmagnetfeldkompensiertes Sensorsignal ermittelt und eine zweite magnetfeldsensitive Sensoreinrichtung ein weiteres nicht-störmagnetfeldkompensiertes Sensorsignal ermittelt, wobei aus den ermittelten Sensorsignalen eine störmagnetfeldkompensierte Größe ermittelt wird. Zur Ermittlung der störmagnetfeldkompensierten Größe wird das weitere Sensorsignal einer rechentechnischen Verarbeitung unterzogen.

Zudem offenbart die DE 100 37 692 A1 eine elektrische Servolenkungsvorrichtung mit einer Lenkdrehmoment-Erfassungseinrichtung, einer Drehmomentreferenzwert-Speichereinrichtung, mit der ein Drehmomentreferenzwert gespeichert wird, einer Drehmomentkompensationseinrichtung, mit der der gespeicherte Drehmomentreferenzwert auf Grundlage des erfassten Lenkdrehmoments angepasst wird, und einer Kompensationssteuereinrichtung, mit der ein erfasstes Lenkdrehmoment auf Grundlage des Drehmomentreferenzwerts, der von der Drehmomentkompensationseinrichtung erhalten wird und des erfassten Lenkdrehmoment berechnet wird.

Problematisch ist, dass Messsignale solcher Drehmomentsensorvorrichtungen Signalartefakte ausweisen können, die die Qualität des Messergebnisses mindern und somit die Einsatzmöglichkeiten der Drehmomentsensorvorrichtungen einschränken. Diese Signalartefakte umfassen insbesondere Nichtlinearitäten und Asymmetrien. Elektromechanische Lenksysteme, die von solchen Drehmomentsensorvorrichtungen Eingangsgrößen für das Lenken der Räder bereitgestellt erhalten, arbeiten insofern mit gewissen Ungenauigkeiten.

Im Lichte der vorangehend erläuterten Problematik liegt der vorliegenden Erfindung die Aufgabe zu Grunde, ein verbessertes elektromechanisches Lenksystem bereitzustellen, welches insbesondere ein präziseres Umsetzen von Lenkbefehlen auf zu lenkende Räder eines Kraftfahrzeugs ermöglicht. Weiter soll ein Verfahren bereitgestellt werden, um die Qualität des Messergebnisses der gattungsgemäßen Drehmomentsensorvorrichtung zu verbessern und somit die gattungsgemäße Drehmomentsensorvorrichtung vielseitiger einsetzbar zu machen.

Die der vorliegenden Erfindung zugrundeliegende Aufgabe wird gelöst durch ein elektromechanisches Lenksystem gemäß Anspruch 1 sowie ein Verfahren zur Kompensation eines Messsignals einer Drehmomentsensorvorrichtung für ein elektromechanisches Lenksystem eines Kraftfahrzeugs mit den Merkmalen des Anspruchs 9. Vorteilhafte Weiterbildungen ergeben sich aus den Unteransprüchen, der Beschreibung und den in den Figuren dargestellten Ausführungsbeispielen.

Das vorgeschlagene elektromechanische Lenksystem umfasst eine Lenkwelle, über die mittels einer Lenkhandhabe ein Lenkbefehl vorgegeben werden kann, ein Lenkgetriebe, welches dazu ausgebildet ist, einen Lenkbefehl unter Berücksichtigung von wenigstens einer Eingangsgröße in eine Lenkbewegung von lenkbaren Rädern eines Kraftfahrzeugs umzusetzen, und eine magnetische Drehmomentsensorvorrichtung zum Messen eines auf die Lenkwelle aufgebrachten Drehmoments. Die Drehmomentsensorvorrichtung weist einen Sensor zur Erfassung eines unkompensierten Messsignals auf, wobei der Drehmomentsensorvorrichtung eine Recheneinheit zugeordnet ist, welche ausgebildet ist, einen ersten Parameter und einen zweiten Parameter zur Kompensation des unkompensierten Messsignals bereitzustellen und ein kompensiertes Messsignal auf Grundlage des unkompensierten Messsignals und des ersten Parameters und des zweiten Parameters zu berechnen und als die wenigstens eine Eingangsgröße bereitzustellen. Hierbei werden insbesondere Signalartefakte kompensiert. Vorteilhafterweise lassen sich mit der vorgeschlagenen Lenksystem Lenkbefehle präziser umsetzen. Das Fahrerlebnis für den Fahrer eines Kraftfahrzeugs wird hierdurch zudem verbessert. Auch lässt sich hierdurch die Fahrsicherheit, insbesondere im Hinblick auf ein autonomes Fahren, vorteilhafterweise erhöhen.

Insbesondere ist vorgesehen, dass die Drehmomentsensorvorrichtung die Recheneinheit umfasst. Es ist aber insbesondere auch vorgesehen, dass die Recheneinheit Teil einer zentralen Steuereinheit eines Kraftfahrzeugs sein kann, wobei die Recheneinheit vorteilhafterweise über eine Schnittstelle mit der Drehmomentsensorvorrichtung verbindbar ist, und die Recheneinheit der Drehmomentsensorvorrichtung auf diese Weise zugeordnet ist. Weiter ist insbesondere vorgesehen, dass die Recheneinheit ausgebildet ist, das kompensierte Messsignal als Eingangsgröße einem Lenksteller, insbesondere einem Lenkgetriebe, bereit zu stellen.

Gemäß einer besonders vorteilhaften Ausgestaltung der Erfindung ist vorgesehen, dass die Lenkwelle eine mit einer Lenkhandhab drehfest verbindbare Eingangswelle und eine über einen tordierbaren Drehstab mit der Eingangswelle verbundene Ausgangswelle umfasst. Vorteilhafterweise umfasst die Drehmomentsensorvorrichtung dabei ferner einen mit der Eingangswelle drehfest verbundenen, mehrpoligen Magnetring zur Erzeugung eines Magnetfelds, ein mit der Ausgangswelle drehfest verbundenes, den Magnetring umschließendes Statorringelement und einen Magnetflusskollektor. Der Sensor der Drehmomentsensorvorrichtung ist dabei vorteilhafterweise ausgebildet, das unkompensierte Messsignal basierend auf dem an dem Magnetflusskollektor anliegenden magnetischen Feldes zu erfassen. Vorteilhafterweise ist der Sensor ein magnetischer Sensor, insbesondere ein Hall-Sensor. Insbesondere ist vorgesehen, dass der Sensor ortsfest in Bezug auf die Lenkwelle angeordnet ist, und sich die Position des Sensors bei einer Drehung der Lenkwelle nicht verändert. Vorteilhafterweise ist diese Ausgestaltung besonders robust gegenüber Störeinflüssen, wie Verunreinigungen, wodurch die Qualität des Messsignals und somit letztlich das Lenkverhalten des Lenksystems weiter verbessert ist.

Erfindungsgemäß ist die Recheneinheit ausgebildet, den ersten Parameter als Linearisierungsparameter zur Kompensation von nichtlinearem Verhalten bereitzustellen. Die Kompensation von nichtlinearem Verhalten verbessert vorteilhafterweise weiter die Qualität des Messsignals und somit letztlich das Lenkverhalten des Lenksystems. Vorzugsweise ist der Linearisierungsparameter ein konstruktionsspezifischer Parameter. Vorteilhafterweise berücksichtigt bzw. modelliert der Linearisierungsparameter insbesondere die geometrische Form des Magnetrings und/oder die Anzahl der Magnetpole des Magnetrings. Weiter ist insbesondere vorgesehen, dass der Linearisierungsparameter ein Polynom-Parameter dritter Ordnung ist, wobei der Linearisierungsparameter vorteilhafterweise zur S-Kurven-Kompensation dient.

Weiter vorteilhaft ist die Recheneinheit ausgebildet, den zweiten Parameter als Symmetriesierungsparameter zur Kompensation von asymmetrischem Verhalten des unkompensierten Messsignals bereitzustellen. Hierdurch wird vorteilhafterweise insbesondere Messungenauigkeiten aufgrund von Toleranzen bzw. Asymmetrien bei der Fertigung der einzelnen Bauelemente der Drehmomentsensorvorrichtung und/oder aufgrund von Toleranzen bzw. Asymmetrien bei der Montage der einzelnen Bauelemente, insbesondere bei der Montage bzw. Anordnung des Magnetrings relativ zu dem Statorringelement der Drehmomentsensorvorrichtung entgegengewirkt. Der Symmetriesierungsparameter ist dabei vorzugsweise ein bauteilspezifischer Parameter. Insbesondere ist vorgesehen, dass der Symmetriesierungsparameter ein Polynom-Parameter zweiter Ordnung ist.

Eine weitere besonders vorteilhafte Ausgestaltung der Erfindung sieht vor, dass die Recheneinheit ausgebildet ist, das kompensierte Messsignal gemäß der folgenden Berechnungsformel zu berechnen:

$$T^* = T + T^2 * p_{symm} + T^3 * p_{lin};$$

mit

T* = kompensiertes Messsignal; T = unkompensiertes Messsignal;

$p_{symm}$ = zweiter Parameter; $p_{lin}$ = erster Parameter.

Das heißt, dass sich das kompensierte Messsignal vorteilhafterweise aus der Summe des unkompensierten Messsignals und dem Produkt der Quadratzahl des unkompensierten Messsignals mit dem zweiten Parameter sowie dem Produkt aus der Kubikzahl des unkompensierten Messsignals und dem ersten Parameter.

Das Berechnen gemäß der vorstehend genannten Berechnungsformel ermöglicht vorteilhafterweise die Kompensation asymmetrischen Verhaltens durch eine Ausgleichs- bzw. Approximationsrechnung zweiter Ordnung. Dies ist eine effiziente und automatisierbare Weise, asymmetrisches Verhalten in dem unkompensierten Messsignal zu kompensieren bzw. auszugleichen.

Das weiter zur Lösung der eingangs genannten Aufgabe vorgeschlagene Verfahren zur Kompensation eines Messsignals einer Drehmomentsensorvorrichtung für ein elektromechanisches Lenksystem eines Kraftfahrzeugs sieht folgende Schritte vor: Erzeugen eines unkompensierten Messsignals (T) durch den Sensor; Bereitstellen zumindest eines ersten Parameters und eines zweiten Parameters zur Kompensation des unkompensierten Messsignals (T); Berechnen eines kompensierten Messsignals (T*) auf Grundlage des unkompensierten Messsignals (T) und des ersten Parameters und des zweiten Parameters. Dabei ist insbesondere vorgesehen, dass eine mit einer Lenkhandhabe drehfest verbundene Eingangswelle über einen tordierbaren Drehstab mit einer Ausgangswelle verbunden ist, und die Drehmomentsensorvorrichtung vorteilhafterweise einen mit der Eingangswelle drehfest verbundenen, mehrpoligen Magnetring zur Erzeugung eines Magnetfelds, ein mit der Ausgangswelle drehfest verbundenes, den Magnetring umschließendes Statorringelement, einen Magnetflusskollektor, und einen zur Erzeugung eines Messsignals aufweist. Insbesondere ist vorgesehen, dass der Sensor auch mit dem nicht rotierenden Lenksystem verbunden ist.

Das erfindungsgemäße Verfahren ermöglicht es, Signalartefakte in dem Messsignal der Drehmomentsensorvorrichtung zu kompensieren. Dadurch ist es möglich, eine robustere Drehmomenterfassung, die weniger störungsanfällig ist, durchzuführen. Dies erweitert die Einsatzmöglichkeiten der Drehmomentsensorvorrichtung.

Das unkompensierte Messsignal (T) kann auch als Rohsignal bezeichnet werden und das kompensierte Messsignal (T*) kann auch als verarbeitetes Signal bezeichnet werden. Das unkompensierte und das kompensierte Messsignal können jeweils ein entsprechendes Drehmomentsignal sein.

Erfindungsgemäß umfasst das Bereitstellen des ersten Parameters folgenden Schritt: Bereitstellen eines Linearisierungsparameters (p_lin) zur Kompensation von nichtlinearem Verhalten des unkompensierten Messsignals (T). Das nichtlineare Verhalten bzw. die Nichtlinearität des unkompensierten Messsignals wird insbesondere durch den gesamten Aufbau des Magnetschaltkreises verursacht. Es handelt sich also um konstruktionsbedingte Signalartefakte. Durch den Aufbau des Magnetkreises und des Messprinzips lässt sich das nichtlineare Verhalten des unkompensierten Messsignals nicht vermeiden. Die Kompensation von nichtlinearem Verhalten verbessert vorteilhafterweise die Qualität des Messergebnisses der Drehmomentsensorvorrichtung.

In weiter vorteilhafter Weise ist der Linearisierungsparameter (p_lin) ein konstruktionsspezifischer Parameter. Der Linearisierungsparameter (p_lin) berücksichtigt bzw. modelliert insbesondere die geometrische Form des Magnetrings und/oder die Anzahl der Magnetpole des Magnetrings. Insbesondere ist vorgesehen, dass der Linearisierungsparameter (p_lin) ein Polynom-Parameter dritter Ordnung ist. Der Linearisierungsparameter (p_lin) dient vorteilhafterweise zur S-Kurven-Kompensation.

Es ist bevorzugt, dass das Bereitstellen des zweiten Parameters folgenden Schritt umfasst: Bereitstellen eines Symmetriesierungsparameters (p_symm) zur Kompensation von asymmetrischem Verhalten des unkompensierten Messsignals (T). Das asymmetrische Verhalten bzw. die Asymmetrie des unkompensierten Messsignals beruht ursächlich insbesondere auf Toleranzen bzw. Asymmetrien bei der Fertigung der einzelnen Bauelemente der Drehmomentsensorvorrichtung und/oder auf Toleranzen bzw. Asymmetrien bei der Montage der einzelnen Bauelemente, insbesondere bei der Montage bzw. Anordnung des Magnetrings relativ zu dem Statorringelement, der Drehmomentsensorvorrichtung. Sowohl die Fertigungstoleranzen als auch die Montagetoleranzen sind in der Praxis nicht vollständig vermeidbar. Daher weist das unkompensierte Messsignal stets ein gewisses Maß an asymmetrischem Verhalten auf, das die Qualität des Messergebnisses mindert. Die Kompensation von nichtlinearem Verhalten vermag nicht, das asymmetrische Verhalten des unkompensierten Messsignals zu verhindern bzw. zu kompensieren. Die Kompensation von asymmetrischem Verhalten verbessert die Qualität des Messergebnisses der erfindungsgemäßen Drehmomentsensorvorrichtung.

Es ist weiter bevorzugt, dass der Symmetriesierungsparameter (p_symm) ein bauteilspezifischer Parameter ist. Der Symmetriesierungsparameter (p_symm) berücksichtigt bzw. modelliert vorteilhafterweise spezifische Merkmale einzelner Bauteile bzw. Bauelemente. Der Symmetriesierungsparameter (p_symm) ist insbesondere ein Polynom-Parameter zweiter Ordnung.

Vorteilhafterweise wird das kompensierte Messsignal (T*) unter Verwendung der folgenden Berechnungsformel berechnet:

$$T^{*} = T + T^{2} * p_{symm} + T^{3} * p_{lin};$$

mit

T* = kompensiertes Messsignal; T = unkompensiertes Messsignal;

$p_{symm}$ = zweiter Parameter; $p_{lin}$ = erster Parameter.

Insbesondere ist dabei vorgesehen, dass der zweite Parameter der Symmetrisierungsparameter ist. Weiter ist insbesondere vorgesehen, dass der erste Parameter der Linearisierungsparameter ist.

Die Berechnungsformel ermöglicht vorteilhafterweise die Kompensation asymmetrischen Verhaltens durch eine Ausgleichs- bzw. Approximationsrechnung zweiter Ordnung. Dies ist eine effiziente und automatisierbare Weise, asymmetrisches Verhalten in dem unkompensierten Messsignal (T) zu kompensieren bzw. auszugleichen.

Weiter vorteilhafterweise ist der Sensor zur Erzeugung eines Messsignals ein magnetischer Sensor, insbesondere ein Hall-Sensor.

Des Weiteren wird eine Drehmomentsensorvorrichtung zum Betreiben des erfindungsgemäßen Verfahrens vorgeschlagen. Insbesondere ist vorgesehen, dass die Drehmomentsensorvorrichtung eine mit einer Lenkhandhabe drehfest verbundene Eingangswelle, eine über einen tordierbaren Drehstab mit der Eingangswelle verbundene Ausgangswelle, einen mit der Eingangswelle drehfest verbundenen, mehrpoligen Magnetring zur Erzeugung eines Magnetfelds, ein mit der Ausgangswelle drehfest verbundenes, den Magnetring umschließendes Statorringelement, einen Magnetflusskollektor und einen Sensor zur Erzeugung eines Messsignals aufweist. Vorteilhafterweise ist der Sensor zur Erzeugung eines Messsignals ein magnetischer Sensor, insbesondere ein Hall-Sensor. Insbesondere ist vorgesehen, dass der Sensor auch mit dem nicht rotierenden Lenksystem verbindbar bzw. verbunden ist. Insbesondere umfasst die Drehmomentsensorvorrichtung eine Recheneinheit. Vorteilhafterweise wird seitens der Recheneinheit der erste Parameter und der zweite Parameter bereitgestellt. Weiter vorteilhaft ist die Recheneinheit zur Berechnung eines kompensierten Messsignals (T*) auf Grundlage des unkompensierten Messsignals (T) und des ersten Parameters (p_lin) und des zweiten Parameters (p_symm) ausgebildet, vorzugsweise gemäß der Formel

$$T^* = T + T^2 * p_{symm} + T^3 * p_{lin};$$

mit

T* = kompensiertes Messsignal; T = unkompensiertes Messsignal;

$p_{symm}$ = zweiter Parameter; $p_{lin}$ = erster Parameter.

Vorteilhafte Ausführungen der Erfindung sind im Folgenden anhand der Zeichnung näher erläutert. Im Einzelnen zeigen

Figur 1     ein Ausführungsbeispiel für ein erfindungsgemäß ausgebildetes elektromechanisches Lenksystem eines Kraftfahrzeugs in einer perspektivischen, schematischen Darstellung,

Figur 2     ein Ausführungsbeispiel für Bauelemente einer Drehmomentsensorvorrichtung für ein elektromechanisches Lenksystem in einer perspektivischen Darstellung,

Figur 3     einen Ausschnitt von einem weiteren Ausführungsbeispiel für ein erfindungsgemäß ausgebildetes elektromechanisches Lenksystem eines Kraftfahrzeugs in einer schematischen Darstellung,

Figur 4     ein zweidimensionales Koordinatensystem, in dem beispielhaft Werte für das erfasste Drehmoment über Werte für ein Referenzdrehmoment dargestellt sind,

Figur 5     ein zweidimensionales Koordinatensystem, in dem beispielhaft Werte für die magnetische Flussdichte über Werte für einen Differenzwinkel dargestellt sind,

Figur 6     ein zweidimensionales Koordinatensystem, in dem beispielhaft Werte für den Messfehler in dem erfassten Drehmoment über Werte für ein Referenzdrehmoment dargestellt sind,

Figur 7     ein zweidimensionales Koordinatensystem, in dem beispielhaft Werte für die magnetische Flussdichte über Werte für einen Differenzwinkel unter Berücksichtigung der Montagetoleranz, die eine Asymmetrie bewirkt, dargestellt sind,

Figur 8     ein zweidimensionales Koordinatensystem, in dem beispielhaft Werte für den Messfehler in dem erfassten Drehmoment über Werte für ein Referenzdrehmoment unter Berücksichtigung der Montagetoleranz, die eine Asymmetrie bewirkt, dargestellt sind.

In den verschiedenen Figuren sind gleiche Teile mit den gleichen Bezugszeichen versehen und sind daher in der Regel jeweils nur einmal benannt bzw. erwähnt.

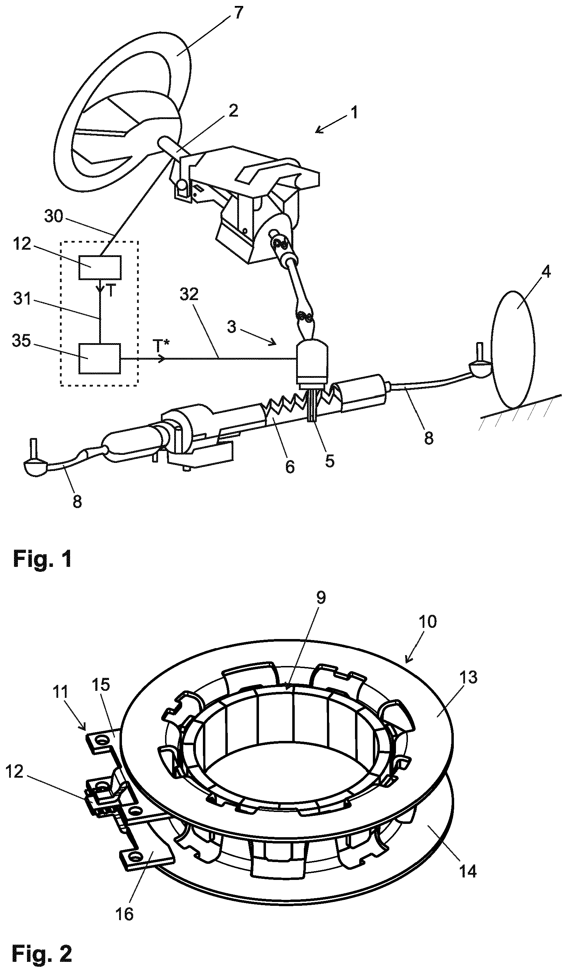

Figur 1 zeigt ein elektromechanisches Lenksystem 1 in einer perspektivischen, vereinfachten Darstellung von schräg vorne in Fahrzeugfahrtrichtung, wobei der besseren Übersicht halber für die Beschreibung der Erfindung nicht wesentliche Bestandteile nicht dargestellt sind.

Das Lenksystem 1 für ein Kraftfahrzeug umfasst eine Lenksäule mit einer Lenkwelle 2. Die Lenkwelle 2 ist dabei über ein Lenkgetriebe 3 mechanisch mit den lenkbaren Rädern 4 eines Kraftfahrzeugs gekoppelt. Das Lenkgetriebe 3 umfasst in diesem Ausführungsbeispiel ein Ritzel 5 und eine gezahnte Koppelstange 6, wobei das Lenkgetriebe 3 zur Übersetzung einer rotatorischen Bewegung des Ritzels 5 in eine translatorische Bewegung der Koppelstange 6 entlang deren Längsachse dient. An dem dem Fahrer zugewandten Ende der Lenkwelle 2 ist eine Lenkhandhabe 7, insbesondere ein Lenkrad, zur Eingabe eines Fahrerlenkwunsches bzw. Lenkbefehls drehfest angeordnet, wobei ein Fahrer die als Lenkrad ausgebildete Lenkhandhabe 7 in bekannter Weise zur Eingabe seines Lenkbefehls drehen kann. Die sich entlang ihrer Längsachse linear bewegende Koppelstange 6 ist in diesem Ausführungsbeispiel jeweils zu beiden Seiten des Kraftfahrzeugs mechanisch mit einer Spurstange 8 gekoppelt. Die Spurstangen 8 sind wiederum jeweils mit den Fahrzeugrädern 4 mechanisch gekoppelt. Das Lenkgetriebe 3 ist somit ausgebildet, einen Lenkbefehl unter Berücksichtigung von wenigstens einer Eingangsgröße in eine Lenkbewegung der lenkbaren Rädern 4 des Kraftfahrzeugs umzusetzen. Das Lenksystem 1 umfasst dazu weiter eine in Fig. 1 lediglich schematisch dargestellte Drehmomentsensorvorrichtung 40, welche einen Sensor 12 zur Erfassung eines unkompensierten Messsignals T aufweist. Die Verbindungslinie 30 in Fig. 1 stellt dabei symbolisch die entsprechende Anordnung des Sensors 12 an der Lenkwelle 2 dar, in welcher der Sensor 12 ein auf die Lenkwelle 2 aufgebrachtes Drehmoment erfassen kann. Über eine Signalleitung 31, die kabelgebunden oder drahtlos ausgebildet sein kann, wird das erfasste unkompensierte Messsignal T an eine der Drehmomentsensorvorrichtung 40 zugeordnete Recheneinheit 35 übertragen. Die Recheneinheit 35 ist in diesem Ausführungsbeispiel Teil der Drehmomentsensorvorrichtung 40. Insbesondere kann die Recheneinheit 30 eine Mikrocontroller-Schaltung sein, insbesondere eine anwendungsspezifische integrierte Schaltung (ASIC). Die Recheneinheit ist dabei ausgebildet, einen ersten Parameter und einen zweiten Parameter zur Kompensation des unkompensierten Messsignals T bereitzustellen und ein kompensiertes Messsignal T* auf Grundlage des unkompensierten Messsignals T und des ersten Parameters sowie des zweiten Parameters zu berechnen, insbesondere als Summe des unkompensierten Messsignals T und dem Produkt der Quadratzahl des unkompensierten Messsignals T mit dem zweiten Parameter sowie dem Produkt aus der Kubikzahl des unkompensierten Messsignals T und dem ersten Parameter. Weiter ist die Recheneinheit 35 ausgebildet, das berechnete kompensierte Messsignal T* als Eingangsgröße über eine Signalleitung 32, die kabelgebunden oder drahtlos, insbesondere als Funkverbindung, ausgebildet sein kann, bereitzustellen, insbesondere dem Lenkgetriebe 3 bzw. einer dem Lenkgetriebe 3 zugeordneten Regeleinheit (in Fig. 1 nicht dargestellt).

Figur 2 zeigt Bauelemente einer Drehmomentsensorvorrichtung, insbesondere für eine Drehmomentsensorvorrichtung 40 gemäß Fig. 1, für ein elektromechanisches Lenksystem eines Kraftfahrzeugs in einer perspektivischen Darstellung.

Die Bauelemente umfassen einen mit einer in Figur 2 nicht dargestellten Eingangswelle drehfest zu verbindenden, mehrpoligen Magnetring 9 zur Erzeugung eines Magnetfelds. Der Magnetring 9 umfasst eine Vielzahl an magnetischen Einzelpolen, wobei direkt nebeneinander bzw. einander angrenzend angeordnete Einzelpole jeweils verschiedene Pole aufweisen. Die Eingangswelle ist in der zentralen Öffnung des Magnetrings 9 anordbar, sodass die Eingangswelle und der Magnetring 9 koaxial zueinander angeordnet sind. Weiterhin umfassen die Bauelemente ein mit einer in Figur 2 ebenfalls nicht dargestellten Ausgangswelle drehfest verbundenes, den Magnetring 9 radial umschließendes Statorringelement 10, einen Magnetflusskollektor 11, und einen Sensor 12 zur Erzeugung eines Messsignals.

Das Statorringelement 10 ist zweiteilig ausgebildet und umfasst ein erstes Statorteilringelement 13 und ein zweites Statorteilringelement 14. Der Magnetflusskollektor 11 ist ebenfalls zweiteilig ausgebildet und umfasst einen ersten Magnetflussteilkollektor 15 und einen zweiten Magnetflussteilkollektor 16. Der Sensor 12 ist ein Hall-Sensor, vorzugsweise in einer Dual-Die-Bauform.

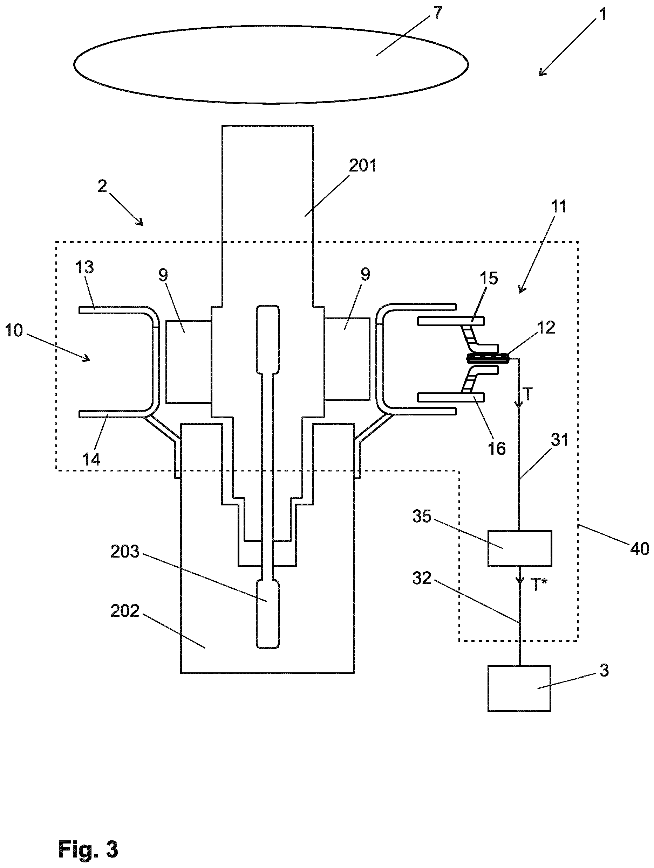

In Figur 3 ist schematisch ein Ausschnitt eines elektromechanischen Lenksystems 1 gezeigt, wobei es sich insbesondere um ein Lenksystem wie unter Bezugnahme auf Figur 1 erläutert, handeln kann. Das Lenksystem 1 umfasst eine Lenkwelle 2, die eine mit einer Lenkhandhabe 7 drehfest verbundene Eingangswelle 201 und eine über einen tordierbaren Drehstab 203 mit der Eingangswelle 201 verbundene Ausgangswelle 202 umfasst. Weiter weist das Lenksystem eine magnetische Drehmomentsensorvorrichtung 40 zum Messen eines auf die Lenkwelle 2 aufgebrachten Drehmoments auf. Die Drehmomentsensorvorrichtung 40 umfasst dabei in diesem Ausführungsbeispiel einen mit der Eingangswelle 201 drehfest verbundenen, mehrpoligen Magnetring 9, insbesondere wie in Figur 2 dargestellt, zur Erzeugung eines Magnetfelds. Weiter umfasst die Drehmomentsensorvorrichtung 40 ein mit der Ausgangswelle 202 drehfest verbundenes, den Magnetring 9 umschließendes Statorringelement 10 mit einem ersten Statorteilringelement 13 und einem zweites Statorteilringelement 14, einen Magnetflusskollektor 11 und einen Sensor 12 zur Erzeugung eines Messsignals T, wobei die entsprechenden Bauelemente, insbesondere der Magnetring 9, das Statorringelement 10, der Magnetflusskollektor 11 und/oder der Sensor 12, vorteilhafterweise wie in Figur 2 dargestellt ausgebildet sind. Der Sensor 12 ist in diesem Ausführungsbeispiel ausgebildet, dass unkompensierte Messsignal T basierend auf dem an dem Magnetflusskollektor 11 anliegenden magnetischen Feld zu erfassen, insbesondere in Abhängigkeit einer Änderung des Betrags und/oder der Richtung der magnetischen Feldstärke. Das unkompensierte Messsignal T wird über eine Signalleitung 31 an eine der Drehmomentsensorvorrichtung 40 zugeordnete Recheneinheit 35, insbesondere eine zentrale ECU (ECU: electronic control unit) des Kraftfahrzeugs übertragen. Die Recheneinheit 35 kann aber insbesondere auch eine von der Drehmomentsensorvorrichtung 40 umfasste Recheneinheit sein, beispielsweise ein ASIC. Die Recheneinheit 35 ist dabei ausgebildet, einen ersten Parameter und einen zweiten Parameter zur Kompensation des unkompensierten Messsignals T bereitzustellen, insbesondere aus einer in Figur 3 nicht explizit dargestellten Speichereinheit der Recheneinheit, und ein kompensiertes Messsignal T* basierend auf dem unkompensierten Messsignal T sowie dem ersten Parameter und dem zweiten Parameter zu bestimmen. Das kompensierte Messsignal T* wird dabei vorteilhafterweise dem Lenksteller des Lenksystems 1, insbesondere dem Lenkgetriebe 3, als Eingangsgröße bereitgestellt. Hierdurch kann vorteilhafterweise eine verbesserte Ansteuerung des Lenkstellers erzielt werden. Insbesondere weist der Lenksteller eine in Figur 3 nicht explizit dargestellte Regeleinheit auf, insbesondere einen Proportionalregler.

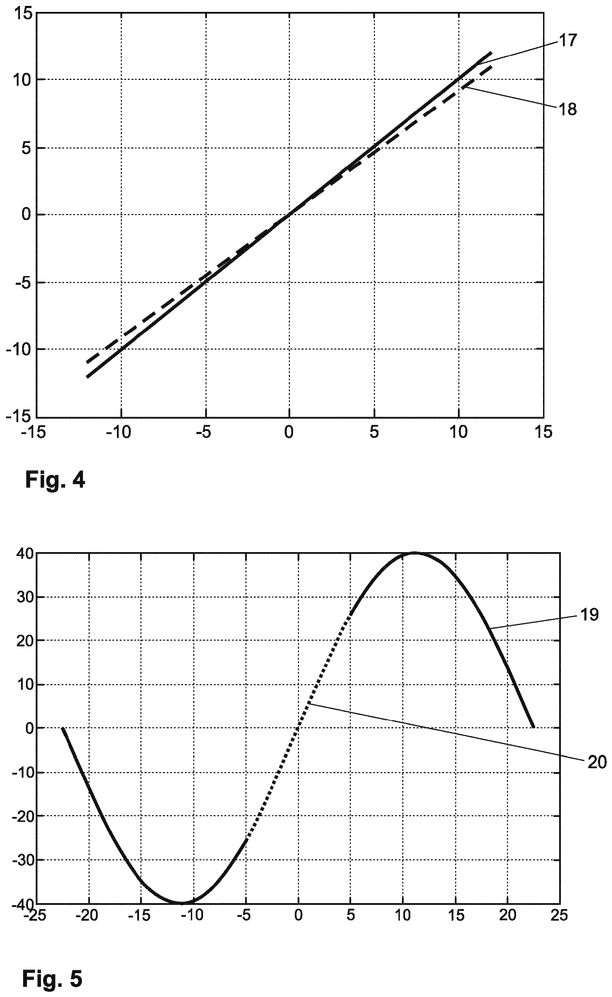

Figur 4 zeigt ein zweidimensionales Koordinatensystem, in dem auf der vertikalen Achse Werte für das erfasste Drehmoment in Nm (Nm: Newtonmeter) über auf der horizontalen Achse aufgetragene Werte für ein Referenzdrehmoment in Nm dargestellt sind.

Die als durchgezogene Linie dargestellte idealisierte Kurve 17 entspricht dem gewünschten Verlauf, und zwar, dass das erfasste Drehmoment exakt dem Referenzdrehmoment entspricht. Demgegenüber entspricht die als gestrichelte Linie dargestellte tatsächliche Kurve 18 dem wahren, S-förmigen Verlauf, nämlich, dass das erfasste Drehmoment von dem Referenzdrehmoment abweicht. Die Abweichung im negativen Referenzdrehmomentbereich (in Figur 4 linksseitig) und die Abweichung im positiven Referenzdrehmomentbereich (in Figur 4 rechtsseitig) sind zueinander vorzeichenverkehrt. Mit anderen Worten, im negativen Referenzdrehmomentbereich weicht das erfasste Drehmoment "nach oben hin" von dem Referenzdrehmoment ab und im positiven Referenzdrehmomentbereich weicht das erfasste Drehmoment "nach unten hin" von dem Referenzdrehmoment ab.

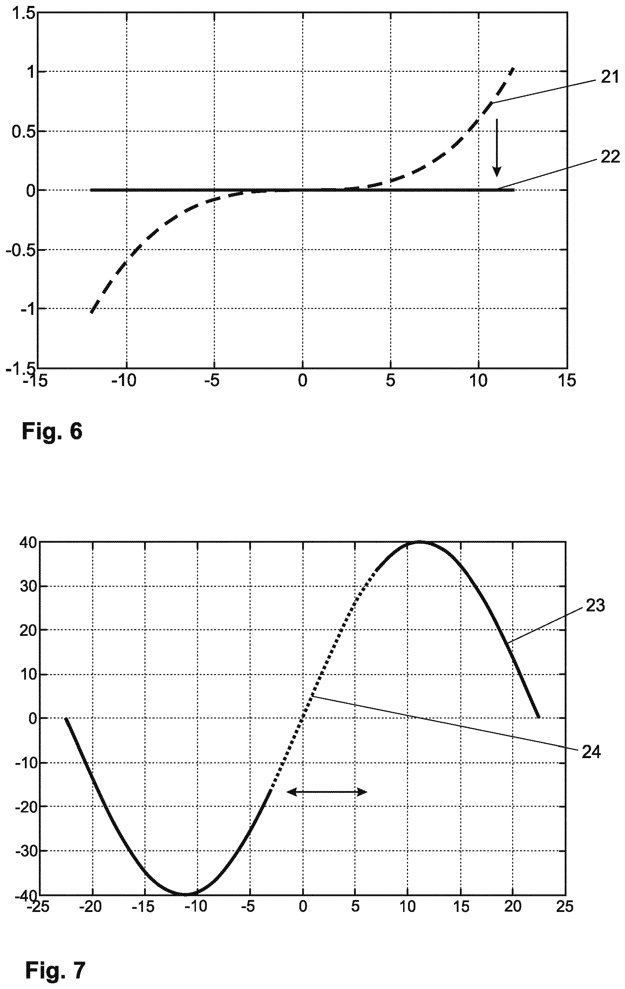

Figuren 5 und 6 zeigen die Kompensation des durch den Sensor erzeugten Messsignals der Drehmomentsensorvorrichtung, und zwar durch Linearisierung.

Figur 5 zeigt ein zweidimensionales Koordinatensystem, in dem auf der vertikalen Achse Werte für die magnetische Flussdichte in mT (mT: Millitesla) über auf der horizontalen Achse aufgetragene Werte für einen Differenzwinkel in ° (°: Grad) dargestellt sind.

Die Kurve 19 ist sinusförmig ausgebildet, das heißt erheblich nichtlinear. In einem Winkelbereich von ca. -5° bis ca. +5°, dargestellt als Kurvenabschnitt 20, ist die Kurve 19 allerdings weniger erheblich nichtlinear. Der Kurvenabschnitt 20 ist näherungsweise linear, wobei der Kurvenabschnitt 20 einen S-förmigen Verlauf aufweist. Der Mittelpunkt des Koordinatensystems liegt in der Mitte des Kurvenabschnitts 20. Demnach liegt der Kurvenabschnitt 20 symmetrisch in Bezug auf den Koordinatenmittelpunkt.

Figur 6 zeigt ein zweidimensionales Koordinatensystem, in dem auf der vertikalen Achse Werte für den Messfehler in dem erfassten Drehmoment in Nm über auf der horizontalen Achse aufgetragene Werte für ein Referenzdrehmoment in Nm dargestellt sind.

Die als gestrichelte Linie dargestellte unkompensierte Kurve 21 entspricht dem Verlauf des Messsignals T vor der erfindungsgemäßen Kompensation der Nichtlinearität. Demgegenüber entspricht die als durchgezogene Linie dargestellte kompensierte Kurve 22 dem Verlauf des Messsignals T* nach der erfindungsgemäßen Kompensation der Nichtlinearität. Der Pfeil deutet die Linearisierung der unkompensierten Kurve 21 in Richtung der kompensierten Kurve 22 an.

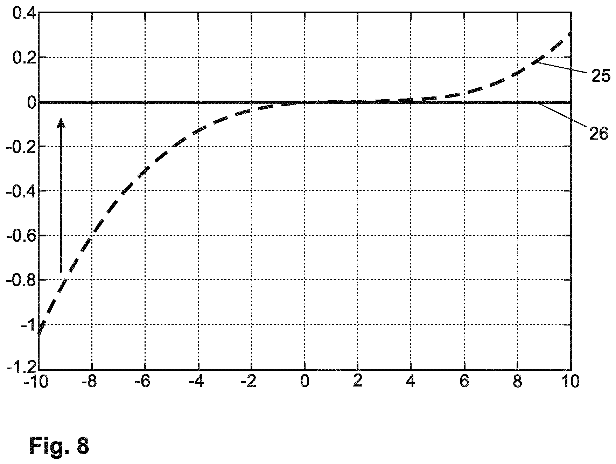

Figuren 7 und 8 zeigen die Kompensation des durch den Sensor erzeugten Messsignals der Drehmomentsensorvorrichtung, und zwar durch Linearisierung und Symmetriesierung. Es überlagern sich hierbei also Signalartefakte der Nichtlinearität und der Asymmetrie.

Figur 7 zeigt ein zweidimensionales Koordinatensystem, in dem auf der vertikalen Achse Werte für die magnetische Flussdichte in mT über auf der horizontalen Achse aufgetragene Werte für einen Differenzwinkel in ° (Grad) dargestellt sind.

Die Kurve 23 ist sinusförmig ausgebildet, das heißt erheblich nichtlinear. In einem Winkelbereich von ca. -5° bis ca. +5°, dargestellt als Kurvenabschnitt 24, ist die Kurve 23 allerdings weniger erheblich nichtlinear. Der Kurvenabschnitt 24 ist näherungsweise linear, wobei der Kurvenabschnitt 24 einen S-förmigen Verlauf aufweist. Im Gegensatz zu der Kurve 19 aus Figur 5 liegt der Mittelpunkt des Koordinatensystems nicht in der Mitte des Kurvenabschnitts 24, sondern außermittig. Der Kurvenabschnitt 24 liegt demnach asymmetrisch in Bezug auf den Koordinatenmittelpunkt. Der Pfeil deutet die Asymmetrie des Kurvenabschnitts 24 an.

Figur 8 zeigt ein zweidimensionales Koordinatensystem, in dem auf der vertikalen Achse Werte für den Messfehler in dem erfassten Drehmoment in Nm über auf der horizontalen Achse aufgetragene Werte für ein Referenzdrehmoment in Nm dargestellt sind.

Die als gestrichelte Linie dargestellte unkompensierte Kurve 25 entspricht dem Verlauf des Messsignals T vor der erfindungsgemäßen Kompensation der Nichtlinearität und der Asymmetrie. Demgegenüber entspricht die als durchgezogene Linie dargestellte kompensierte Kurve 26 dem Verlauf des Messsignals T* nach der erfindungsgemäßen Kompensation der Nichtlinearität und der Asymmetrie. Der Pfeil deutet die Linearisierung der unkompensierten Kurve 25 in Richtung der kompensierten Kurve 26 an. Im Vergleich zu der Kurve 21 aus Figur 6 liegt der Mittelpunkt des Koordinatensystems entlang der horizontalen Achse nicht in der Mitte des Plateaus der Kurve 25, sondern außermittig. Die Kurve 25 liegt demnach asymmetrisch in Bezug auf den Koordinatenmittelpunkt.

## Patentansprüche

1. Elektromechanisches Lenksystem (1) umfassend eine Lenkwelle (2), über die mittels einer Lenkhandhabe (7) ein Lenkbefehl vorgegeben werden kann, ein Lenkgetriebe (3), welches dazu ausgebildet ist, einen Lenkbefehl unter Berücksichtigung von wenigstens einer Eingangsgröße in eine Lenkbewegung von lenkbaren Rädern (4) eines Kraftfahrzeugs umzusetzen, und eine magnetische Drehmomentsensorvorrichtung (40) zum Messen eines auf die Lenkwelle (2) aufgebrachten Drehmoments, wobei die Drehmomentsensorvorrichtung (40) einen Sensor (12) zur Erfassung eines unkompensierten Messsignals (T) aufweist, und wobei der Drehmomentsensorvorrichtung (40) eine Recheneinheit (35) zugeordnet ist, welche ausgebildet ist, einen ersten Parameter (p_lin) und einen zweiten Parameter (p_symm) zur Kompensation des unkompensierten Messsignals (T) bereitzustellen und ein kompensiertes Messsignal (T*) auf Grundlage des unkompensierten Messsignals (T) und des ersten Parameters (p_lin) und des zweiten Parameters (p_symm) zu berechnen und als die wenigstens eine Eingangsgröße bereitzustellen, **dadurch gekennzeichnet, dass** die Recheneinheit (35) ausgebildet ist, den ersten Parameter (p_lin) als Linearisierungsparameter zur Kompensation von nichtlinearem Verhalten bereitzustellen.

2. Elektromechanisches Lenksystem (1) nach Anspruch 1, **dadurch gekennzeichnet, dass** die Lenkwelle (2) eine mit einer Lenkhandhabe (7) drehfest verbindbare Eingangswelle (201) und eine über einen tordierbaren Drehstab (203) mit der Eingangswelle (201) verbundene Ausgangswelle (202) umfasst, wobei die Drehmomentsensorvorrichtung (40) des Weiteren einen mit der Eingangswelle (201) drehfest verbundenen, mehrpoligen Magnetring (9) zur Erzeugung eines Magnetfelds, ein mit der Ausgangswelle (202) drehfest verbundenes, den Magnetring (9) umschließendes Statorringelement (10) und einen Magnetflusskollektor (11) umfasst, wobei der Sensor (12) ausgebildet ist, das unkompensierte Messsignal (T) basierend auf dem an dem Magnetflusskollektor (11) anliegenden magnetischen Feld zu erfassen.

3. Elektromechanisches Lenksystem (1) nach Anspruch einem der vorstehenden Ansprüche, **dadurch gekennzeichnet, dass** der Linearisierungsparameter ein konstruktionsspezifischer Parameter ist.

4. Elektromechanisches Lenksystem (1) nach einem der vorstehenden Ansprüche,
**dadurch gekennzeichnet, dass** der Linearisierungsparameter ein Polynom-Parameter dritter Ordnung ist.

5. Elektromechanisches Lenksystem (1) nach einem der vorgenannten Ansprüche,
**dadurch gekennzeichnet, dass** die Recheneinheit (35) ausgebildet ist, den zweiten Parameter (p_lin) als Symmetrisierungsparameter (p_symm) zur Kompensation von asymmetrischem Verhalten des unkompensierten Messsignals (T) bereitzustellen.

6. Elektromechanisches Lenksystem (1) nach Anspruch 5, **dadurch gekennzeichnet, dass** der Symmetrisierungsparameter (p_symm) ein bauteilspezifischer Parameter ist.

7. Elektromechanisches Lenksystem (1) nach Anspruch 5 oder Anspruch 6, **dadurch gekennzeichnet, dass** der Symmetrisierungsparameter (p_symm) ein Polynom-Parameter zweiter Ordnung ist.

8. Elektromechanisches Lenksystem (1) nach einem der vorgenannten Ansprüche,
**dadurch gekennzeichnet, dass** die Recheneinheit (35) ausgebildet ist, das kompensierte Messsignal (T*) gemäß der folgenden Berechnungsformel zu berechnen:

$$T^* = T + T^2 * p_{symm} + T^3 * p_{lin};$$

mit

T* = kompensiertes Messsignal; T = unkompensiertes Messsignal;
$p_{symm}$ = zweiter Parameter; $p_{lin}$ = erster Parameter.

9. Verfahren zur Kompensation eines Messsignals einer Drehmomentsensorvorrichtung (40) für ein elektromechanisches Lenksystem (1) eines Kraftfahrzeugs, wobei eine mit einer Lenkhandhabe (7) drehfest verbundene Eingangswelle (201) über einen tordierbaren Drehstab (203) mit einer Ausgangswelle (202) verbunden ist, und wobei die Drehmomentsensorvorrichtung (40) einen mit der Eingangswelle (201) drehfest verbundenen, mehrpoligen Magnetring (9) zur Erzeugung eines Magnetfelds, ein mit der Ausgangswelle (202) drehfest verbundenes, den Magnetring (9) umschließendes Statorringelement (10), einen Magnetflusskollektor (11), und einen Sensor (12) zur Erzeugung eines Messsignals aufweist, umfassend folgende Schritte:

Erzeugen eines unkompensierten Messsignals (T) durch den Sensor (12);
Bereitstellen eines ersten Parameters (p_lin) und eines zweiten Parameters (p_symm) zur Kompensation des unkompensierten Messsignals (T);
Berechnen eines kompensierten Messsignals (T*) auf Grundlage des unkompensierten Messsignals (T) und des ersten Parameters (p_lin) und des zweiten Parameters (p_symm), wobei das Bereitstellen des ersten Parameters (p_lin) folgenden Schritt umfasst:
Bereitstellen eines Linearisierungsparameters (p_lin) zur Kompensation von nichtlinearem Verhalten des unkompensierten Messsignals (T).

10. Verfahren nach Anspruch 9, **dadurch gekennzeichnet, dass** der Linearisierungsparameter (p_lin) ein konstruktionsspezifischer Parameter ist.

11. Verfahren nach Anspruch 9 oder Anspruch 10, **dadurch gekennzeichnet, dass** der Linearisierungsparameter (p_lin) ein Polynom-Parameter dritter Ordnung ist.

12. Verfahren nach einem der Ansprüche 9 bis 11, **dadurch gekennzeichnet, dass** das Bereitstellen des zweiten Parameters (p_symm) folgenden Schritt umfasst:
Bereitstellen eines Symmetrisierungsparameters (p_symm) zur Kompensation von asymmetrischem Verhalten des unkompensierten Messsignals (T).

13. Verfahren nach Anspruch 12, **dadurch gekennzeichnet, dass** der Symmetrisierungsparameter (p_symm) ein bauteilspezifischer Parameter ist.

14. Verfahren nach Anspruch 12 oder Anspruch 13, **dadurch gekennzeichnet, dass** der Symmetrisierungsparameter (p_symm) ein Polynom-Parameter zweiter Ordnung ist.

15. Verfahren nach einem der vorgenannten Ansprüche 9 bis 14, **dadurch gekennzeichnet, dass** das kompensierte Messsignal (T*) gemäß der folgenden Berechnungsformel berechnet wird:

$$T^* = T + T^2 * p_{symm} + T^3 * p_{lin};$$

mit

T* = kompensiertes Messsignal; T = unkompensiertes Messsignal;
$p_{symm}$ = zweiter Parameter; $p_{lin}$ = erster Parameter.

**Claims**

1. An electromechanical steering system (1) comprising a steering shaft (2), by means of which a steering command can be specified by means of a steering handling device (7), a steering gear (3), which is designed to convert a steering command into a steering movement of steerable wheels (4) of a motor vehicle, taking into account at least one input variable, and a magnetic torque sensor device (40) for measuring a torque applied to the steering shaft (2), wherein the torque sensor device (40) comprises a sensor (12) for detecting an uncompensated measurement signal (T), wherein the torque sensor device (40) is assigned a computing unit (35), which is designed to provide a first parameter (p_lin) and a second parameter (p_symm) for compensation of the uncompensated measurement signal (T) and to calculate a compensated measurement signal (T*) based on the uncompensated measurement signal (T) and the first parameter (p_lin) and the second parameter (p_symm) and to provide it as the at least one input variable, **characterized in that** the computing unit (35) is designed to provide the first parameter (p_lin) as a linearization parameter for compensation of nonlinear behavior.

2. The electromechanical steering system (1) as claimed in claim 1, **characterized in that** the steering shaft (2) comprises an input shaft (201) which can be non-rotatably connected to a steering handling device (7) and an output shaft (202) connected to the input shaft (201) by a torsion bar (203) that can be twisted, wherein the torque sensor device (40) further comprises a multi-pole magnetic ring (9) non-rotatably connected to the input shaft (201) for generating a magnetic field, a stator ring element (10) non-rotatably connected to the output shaft (202) and enclosing the magnetic ring (9), and a magnetic flux collector (11), wherein the sensor (12) is designed to detect the uncompensated measurement signal (T) based on the magnetic field applied to the magnetic flux collector (11).

3. The electromechanical steering system (1) as claimed in in one of the aforementioned claims, **characterized in that** the linearization parameter is a design-specific parameter.

4. The electromechanical steering system (1) as claimed in any one of the aforementioned claims, **characterized in that** the linearization parameter is a third-order polynomial parameter.

5. The electromechanical steering system (1) as claimed in any one of the aforementioned claims, **characterized in that** the computing unit (35) is designed to provide the second parameter (p_lin) as a symmetrization parameter (p_symm) for compensation of asymmetrical behavior of the uncompensated measurement signal (T).

6. The electromechanical steering system (1) as claimed in claim 5, **characterized in that** the symmetrization parameter (p_symm) is a component-specific parameter.

7. The electromechanical steering system (1) as claimed in claim 5 or claim 6, **characterized in that** the symmetrization parameter (p_symm) is a second-order polynomial parameter.

8. The electromechanical steering system (1) as claimed in any one of the aforementioned claims, **characterized in that** the computing unit (35) is designed to calculate the compensated measurement signal (T*) according to the following calculation formula:

$$T^* = T + T^2 * p_{symm} + T^3 * p_{lin};$$

with

T* = compensated measurement signal; T = uncompensated measurement signal;
$p_{symm}$ = second parameter; $p_{lin}$ = first parameter.

9. A method for compensation of a measurement signal of a torque sensor device (40) for an electromechanical steering system (1) of a motor vehicle, wherein an input shaft (201) non-rotatably connected to a steering handling device (7) is connected to an output shaft (202) via a torsion bar (203) that can be twisted, and wherein the torque sensor device (40) comprises a multi-pole magnetic ring (9) non-rotatably connected to the input shaft (201) for generating a magnetic field, a stator ring element (10) non-rotatably connected to the output shaft (202) and enclosing the magnetic ring (9), a magnetic flux collector (11), and a sensor (12) for generating a measurement signal, including the following steps:

generating an uncompensated measurement signal (T) by the sensor (12);
providing a first parameter (p_lin) and a second parameter (p_symm) for compensation of the uncompensated measurement signal (T);

calculating a compensated measurement signal (T*) based on the uncompensated measurement signal (T) and the first parameter (p_lin) and the second parameter (p_symm), wherein the provision of the first parameter (p_lin) includes the following step:

providing a linearization parameter (p_lin) for compensation of nonlinear behavior of the uncompensated measurement signal (T).

10. The method as claimed in claim 9, **characterized in that** the linearization parameter (p_lin) is a design-specific parameter.

11. The method as claimed in claim 9 or claim 10, **characterized in that** the linearization parameter (p_lin) is a third-order polynomial parameter.

12. The method as claimed in any one of claims 9 to 11, **characterized in that** the provision of the second parameter (p_symm) includes the following step:

providing a symmetrization parameter (p_symm) for compensation of asymmetrical behavior of the uncompensated measurement signal (T).

13. The method as claimed in claim 12, **characterized in that** the symmetrization parameter (p_symm) is a component-specific parameter.

14. The method as claimed in claim 12 or claim 13, **characterized in that** the symmetrization parameter (p_symm) is a second-order polynomial parameter.

15. The method as claimed in any one of the preceding claims 9 to 14, **characterized in that** the compensated measurement signal (T*) is calculated according to the following calculation formula:

$$T^* = T + T^2 * p_{symm} + T^3 * p_{lin};$$

with

T* = compensated measurement signal; T = uncompensated measurement signal;
$p_{symm}$ = second parameter; plin = first parameter.

**Revendications**

1. Système de direction électromécanique (1) comprenant un arbre de direction (2), au moyen duquel une commande de direction peut être spécifiée par un dispositif de manipulation de la direction (7), un boîtier de direction (3), qui est conçu pour convertir une commande de direction en un mouvement de direction des roues directrices (4) d'un véhicule à moteur, en tenant compte d'au moins une variable d'entrée, et un dispositif de capteur de couple magnétique (40) pour mesurer un couple appliqué à l'arbre de direction (2), dans lequel le dispositif de capteur de couple (40) comprend un capteur (12) pour détecter un signal de mesure non compensé (T), le dispositif de capteur de couple (40) est associé à une unité de calcul (35) conçue pour fournir un premier paramètre (p_lin) et un second paramètre (p_symm) pour la compensation du signal de mesure non compensé (T) et pour calculer un signal de mesure compensé (T*) basé sur le signal de mesure non compensé (T) et le premier paramètre (p_lin) et le second paramètre (p_symm) et le fournir comme au moins une variable d'entrée, **caractérisé en ce que** l'unité de calcul (35) est conçue pour fournir le premier paramètre (p_lin) en tant que paramètre de linéarisation pour la compensation d'un comportement non linéaire.

2. Le système de direction électromécanique (1) selon la revendication 1, **caractérisé en ce que** l'arbre de direction (2) comprend un arbre d'entrée (201) qui peut être relié de manière non rotative à un dispositif de manipulation de la direction (7) et un arbre de sortie (202) relié à l'arbre d'entrée (201) par une barre de torsion (203) qui peut être tordue, le dispositif de capteur de couple (40) comprend en outre un anneau magnétique multipolaire (9) relié de manière non rotative à l'arbre d'entrée (201) pour générer un champ magnétique, un élément annulaire de stator (10) relié de manière non rotative à l'arbre de sortie (202) et entourant l'anneau magnétique (9), et un collecteur de flux magnétique (11), le capteur (12) étant conçu pour détecter le signal de mesure non compensé (T) sur la base du champ magnétique appliqué au collecteur de flux magnétique (11).

3. Système de direction électromécanique (1) selon l'une des revendications précédentes, **caractérisé en ce que** le paramètre de linéarisation est un paramètre spécifique à la conception.

4. Système de direction électromécanique (1) selon l'une quelconque des revendications précédentes, **caractérisé en ce que** le paramètre de linéarisation est un paramètre polynomial du troisième ordre.

5. Système de direction électromécanique (1) selon l'une des revendications précédentes, **caractérisé en ce que** l'unité de calcul (35) est conçue pour fournir le second paramètre (p_lin) en tant que paramètre de symétrisation (p_symm) pour la compensation du comportement asymétrique du signal de mesure non compensé (T).

6. Système de direction électromécanique (1) selon la revendication 5, **caractérisé en ce que** le paramètre de symétrisation (p_symm) est un paramètre spécifique au composant.

7. Système de direction électromécanique (1) selon la revendication 5 ou la revendication 6, **caractérisé en ce que** le paramètre de symétrisation (p_symm) est un paramètre polynomial du deuxième ordre.

8. Système de direction électromécanique (1) selon l'une des revendications précédentes, **caractérisé en ce que** l'unité de calcul (35) est conçue pour calculer le signal de mesure compensé (T*) selon la formule de calcul suivante :

$$T^* = T + T^2 * p_{symm} + T^3 * p_{lin};$$

avec

T* = signal de mesure compensé ; T = signal de mesure non compensé ;
$p_{symm}$ = deuxième paramètre ; $p_{lin}$ = premier paramètre.

9. Procédé de compensation d'un signal de mesure d'un dispositif de capteur de couple (40) pour un système de direction électromécanique (1) d'un véhicule automobile, dans lequel un arbre d'entrée (201) relié de manière non rotative à un dispositif de manipulation de la direction (7) est relié à un arbre de sortie (202) par l'intermédiaire d'une barre de torsion (203) qui peut être torsadée, et dans lequel le dispositif de capteur de couple (40) comprend un anneau magnétique multipolaire (9) relié de manière non rotative à l'arbre d'entrée (201) pour générer un champ magnétique, un élément annulaire de stator (10) relié de manière non rotative à l'arbre de sortie (202) et entourant l'anneau magnétique (9), un collecteur de flux magnétique (11), et un capteur (12) pour générer un signal de mesure, y compris les étapes suivantes :

génération d'un signal de mesure non compensé (T) par le capteur (12) ;
fournir un premier paramètre (p_lin) et un second paramètre (p_symm) pour la compensation du signal de mesure non compensé (T) ;
calculer un signal de mesure compensé (T*) sur la base du signal de mesure non compensé (T), du premier paramètre (p_lin) et du second paramètre (p_symm), la fourniture du premier paramètre (p_lin) comprenant l'étape suivante :
fournir un paramètre de linéarisation (p_lin) pour la compensation du comportement non linéaire du signal de mesure non compensé (T).

10. Procédé selon la revendication 9, **caractérisé en ce que** le paramètre de linéarisation (p_lin) est un paramètre spécifique à la conception.

11. Procédé selon la revendication 9 ou la revendication 10, **caractérisé en ce que** le paramètre de linéarisation (p_lin) est un paramètre polynomial du troisième ordre.

12. Procédé selon l'une des revendications 9 à 11, **caractérisé en ce que** la fourniture du second paramètre (p_symm) comprend l'étape suivante :
fournir un paramètre de symétrisation (p_symm) pour compenser le comportement asymétrique du signal de mesure non compensé (T).

13. Procédé selon la revendication 12, **caractérisé en ce que** le paramètre de symétrisation (p_symm) est un paramètre spécifique au composant.

14. Procédé selon la revendication 12 ou la revendication 13, **caractérisé en ce que** le paramètre de symétrisation (p_symm) est un paramètre polynomial de second ordre.

15. Procédé selon l'une des revendications précédentes 9 à 14, **caractérisé en ce que** le signal de mesure compensé (T*) est calculé selon la formule de calcul suivante :

$$T^* = T + T^2 * p_{symm} + T^3 * p_{lin}$$

avec

T* = signal de mesure compensé ;T= signal de mesure non compensé ;
$p_{symm}$= deuxième paramètre ; plin= premier paramètre.

**Fig. 1**

**Fig. 2**

**Fig. 3**

**Fig. 4**

**Fig. 5**

**Fig. 6**

**Fig. 7**

**Fig. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2664906 A2
- WO 2017115922 A1
- US 2020264062 A1
- DE 102015117504 A1
- DE 10037692 A1